# EUROPEAN PATENT APPLICATION

(11) **EP 4 216 590 A1**
(43) Date of publication of application: **26.07.2023**
(21) Application number: 23152018.0
(22) Date of filing: 17.01.2023
(51) Int. Cl.: H04W 12/55, H04W 12/69, H04W 8/00

(54) **NETWORK CONNECTION SYSTEM AND NETWORK CONNECTION METHOD THEREOF**

(30) Priority: 25.01.2022 TW 111103133
(71) Applicant: Arcadyan Technology Corporation, Hsinchu City 30071 (TW)
(72) Inventor: Tseng, Wei Ru, 30071 Hsinchu City (TW); Huang, Kuo Shu, 30071 Hsinchu City (TW); Lin, Hong Chou, 30071 Hsinchu City (TW); Teng, Wei Yang, 30071 Hsinchu City (TW); Wang, Wen Chieh, 30071 Hsinchu City (TW)
(74) Representative: Gee, Steven William

(57) **Abstract**

The present invention relates to a network connection system. The network connection system includes a gateway, an extender, and a wireless access point. Wherein, the gateway can be used as one of the enrollee router and the registrar router, and the extender can be used as the other of the enrollee router and the registrar router, and the extender can send authentication information to the gateway. After the gateway confirms that the extender is a model supported by the gateway according to the authentication information, the gateway sends a credential to the extender, allowing the extender to establish a wireless mesh network through the wireless access point. In this way, the purpose of seamless connection is achieved. In addition, the network connection system of the present invention has functions such as high security and convenience.

## Description

### CROSS-REFERENCE TO RELATED APPLICATION

This application claims the priority of Taiwanese patent application No. 111103133, filed on January 25, 2022, which is incorporated herewith by reference.

### BACKGROUND OF THE INVENTION

### 1. Field of the Invention

The present invention relates generally to a network connection systems, and more particularly, to a network connection system and a network connection method thereof.

### 2. The Prior Arts

Because of the maturity and vigorous development of wireless network technology and the reduction of manufacturing costs of wireless network equipment on the market, communication using wireless network technology has become an indispensable part of life. By using the characteristics of radio frequency as a transmission medium in wireless networks, people are no longer limited by connection lines but can move with personal mobile computing devices, such as notebook computers, mobile phones, or personal digital assistants. It is generally believed that in the 21st century, the whole world is gradually moving towards mobility.

The Wi-Fi Protected Setup (WPS) standard is a protocol standard released by the Wi-Fi Alliance in 2007. The objective is to allow the users, without the knowledge of information security, to register a wireless network device simply so that both the authenticator and the legitimate device in the wireless network could have the same security credential. After the registration, the legitimate device can use the security credential to pass the authentication of the wireless network, and then use the network. The available products on the market mainly depend on two approaches to using WPS: Push Button Configuration (PBC) and Personal Information Number (PIN).

However, the two approaches currently on the market have respective shortcomings. The PBC method is to establish a wireless mesh network through the buttons. Therefore, the disadvantage of using the PBC method to complete WPS to use the network is that the wireless client must press the PBC button to join the wireless mesh network within a certain time after the base station presses the PBC button. In addition to causing difficulties in use, this approach may also cause the wireless client to establish an unexpected connection with other base stations that have also pressed the PBC button, wherein a potential problem of connection security exists. And since the PIN method needs to obtain the PIN code of the client network card and input it into the setting interface of the user. The disadvantage of using the PIN method to complete WPS to use the network is that the connection process may fail due to input errors, which increases the difficulty for users in WPS setting, resulting in very inconvenience in use. Moreover, both the aforementioned two approaches are difficult to realize simultaneous login of multiple devices.

In view of the shortcomings, how to reduce the user's difficulty in WPS setting while taking into account the security is one of the problems that developers need to solve urgently.

### SUMMARY OF THE INVENTION

A primary objective of the present invention is to provide a network connection system that uses the network connection method of the present invention. According to the network connection method, the gateway of the network connection system can be an enrollee router or a registrar router, and the extender of the network connection system can act as the other one of the enrollee router or the registrar router. The extender will send a piece of authentication information to the gateway when establishing a wireless mesh network through a wireless access point. And after the gateway confirms the extender is a model supported by the gateway according to the authentication information, the gateway will transmit the backhaul security credentials to the extender, In this way, the design of Wi-Fi security protection setting standards and the initial registration of nodes are used to automatically complete the onboarding process of WPS. At the same time, to ensure that malicious/illegal nodes cannot easily disguise as the initial legitimate nodes before the topology establishment to arbitrarily penetrate the network before the cluster forming topology to achieve the purpose of high security.

Another objective of the present invention is to provide a network connection system that uses the gateway as the enrollee router and the extender as the registrar router. The extender of the network connection system will send the manufacturer information, model name information, and model number information as authentication information for the gateway to check if the extender is a model supported by the gateway. And after confirming that the extender is a model supported by the gateway, the gateway will transmit the backhaul security credential to the extender. Then the onboarding process of the enrollee router and the registrar router is completed, and the extender can establish a wireless mesh network through the wireless access point. The network connection system disclose how to join the topology network and obtain security credential almost automatically, minimizing users' difficulty in WPS setting and achieving a high degree of convenience.

In order to achieve the above objectives, the present invention provides a network connection system, which includes: a gateway, used as one of an enrollee router or a registrar router of an onboarding process of Wi-Fi Protected Setup (WPS); an extender, coupled to the gateway, and used as the other one of the enrollee router or the registrar router of an onboarding process of WPS, and the extender transmitting a piece of authentication information to the gateway; and at least one wireless access point (AP), coupled to the gateway and the extender, used for establishing a wireless mesh network; wherein the authentication information is related to the extender; and after the gateway confirms that the extender is a model supported by the gateway according to the authentication information, the gateway transmits a backhaul security credential to the extender so that the extender can establish a wireless mesh network through the wireless access point.

Preferably, according to the network connection system of the present invention, the gateway has a wireless access point identification number (AP PIN), and the AP PIN corresponds to the wireless access point.

Preferably, according to the network connection system of the present invention, the wireless access point includes a plurality of basic service set identifiers (BSSIDs).

Preferably, according to the network connection system of the present invention, the authentication information includes one or any combination of a piece of manufacturer information, a piece of model name information, and a piece of model number information.

Preferably, according to the network connection system of the present invention, the network connection system further includes a controller, which is coupled to the gateway and the extender and used for controlling the network connection system to configure the gateway and the extender as enrollee router and registrar router respectively.

Preferably, according to the network connection system of the present invention, the gateway and the extender complete the onboarding process of the enrollee router and the registrar router through a first message exchange and a second message exchange, wherein the extender transmits the authentication information to the gateway during the first message exchange, and the gateway transmits the security credential to the extender during the second message exchange.

Preferably, according to the network connection system of the present invention, the gateway acts as an enrollee router, and the extender acts as a registrar router.

Moreover, in order to achieve the above objectives, based on the aforementioned network connection system, the present invention further provides a network connection method for executing on the network connection system built in an environment, comprising: a scanning step, a controller scans whether the wireless access point exists in the environment, and the wireless access point includes a plurality of basic service set identifiers (BSSIDs); a selection step, the controller receives a piece of selection information for selecting one of the BSSIDs; an input step, the controller receives a wireless access point personal identification number (AP PIN) of the gateway; and a connection step, the controller executes one of a standard identification number network connection or an AP PIN network connection to complete the onboarding of the enrollee router and the registrar router to establish a wireless mesh network; wherein, if the controller scanning does not generate the wireless access point in the scanning step or the controller does not receive the selection information of one of the BSSIDs in the selection step, then the connection step performs the standard identification network connection to establish the wireless mesh network; otherwise, the connection step establishes the wireless mesh network by executing the AP PIN network connection.

Preferably, according to the network connection method of the present invention, the network connection method further includes a recording step, the controller confirms whether the extender has ever established a wireless mesh through the AP PIN network connection; if yes, a network connection is established directly through the standard identification number network connection; otherwise, the scanning step is performed.

Preferably, according to the network connection method of the present invention, when using the standard identification number network connection to establish the wireless mesh network, the network connection method further comprises: a configuration step, the controller configures the extender as the enrollee router and the gateway as the registrar router; an encryption step, the gateway and the extender transmit information to each other to randomly generate a piece of encrypted information; a triggering step, both the extender and the gateway input the encrypted information, so that the extender and the gateway authenticate each other to complete the onboarding process; an authentication step, the gateway transmits the security credential to the extender, so that the extender establishes the wireless mesh network through the wireless access point.

Preferably, according to the network connection method of the present invention, when using the AP PIN network connection to establish the wireless mesh network, the network connection method further comprises: a configuration step, the controller configures the gateway as an enrollee router, and the extender as the registrar router; a transmission step, the extender transmits the authentication information to the gateway during a first message exchange; a confirmation step, the gateway confirms that the extender is a model supported by the gateway according to the authentication information; an authentication step, the gateway transmits the security credential to the extender during a second message exchange, so that the extender establishes the wireless mesh network through the wireless access point.

In summary, the present invention mainly uses the network connection system and the method to transmit the authentication information to the gateway from the extender; after the gateway confirms that the extender is a model supported by the gateway according to the authentication information, the gateway transmits the backhaul security credential to the extender so that the extender can establish a wireless mesh network through the wireless access point. In this way, the design of the Wi-Fi security protected setup standard and the initial registration of nodes are used to ensure that malicious/illegitimate nodes cannot easily disguise as the initial legitimate nodes before topology establishment to mix into the network before the random topology is formed; thereby achieving a high degree of security and convenience, and the gateway can control the type of extender to connect.

### BRIEF DESCRIPTION OF THE DRAWINGS

The present invention will be apparent to those skilled in the art by reading the following detailed description of a preferred embodiment thereof, with reference to the attached drawings, in which:
Fig. 1 is a schematic view illustrating a WPS onboarding process;
Fig. 2 is a schematic view of a network connection system according to the present invention;
Fig. 3 is an exemplary illustration of the onboarding process of the network connection system according to the present invention;
Fig. 4 is a schematic view illustrating the specific information of the first message exchange of the network connection system according to the present invention;
Fig. 5 is a flowchart illustrating the steps of implementing the network connection method of the present invention;
Fig. 6 is a schematic view of a network connection system according to the first embodiment of the present invention;
Fig. 7 is an exemplary program screen illustrating the actual execution of the network connection system according to the present invention;
Fig. 8 is a flowchart illustrating the steps of executing the network connection method according to the first embodiment of the present invention;
Fig. 9 is a schematic view illustrating the actual execution of the network connection system according to the first embodiment of the present invention;
Fig. 10 is a flowchart illustrating the steps of the standard identification number network connection according to the first embodiment of the present invention;
Fig. 11 is a schematic view illustrating the actual execution of the standard identification number network connection according to the first embodiment of the present invention;
Fig. 12 is a flowchart illustrating the steps of the wireless access point identification number network connection according to the first embodiment of the present invention;
Fig. 13 is a schematic view illustrating the actual execution of the wireless access point identification number network connection according to the first embodiment of the present invention;
Fig. 14 is a flowchart illustrating the steps of executing the network connection method according to the second embodiment of the present invention; and
FIG. 15 is a schematic view illustrating the actual execution of the network connection system according to the second embodiment of the present invention.

### DETAILED DESCRIPTION OF THE PREFERRED EMBODIMENT

The accompanying drawings are included to understand the invention further and are incorporated in and constitute a part of this specification. The drawings illustrate embodiments of the invention and, together with the description, serve to explain the principles of the invention.

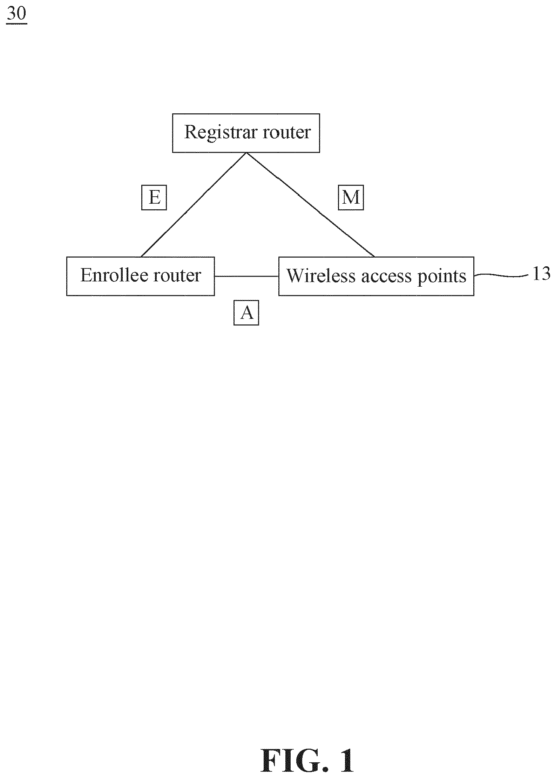

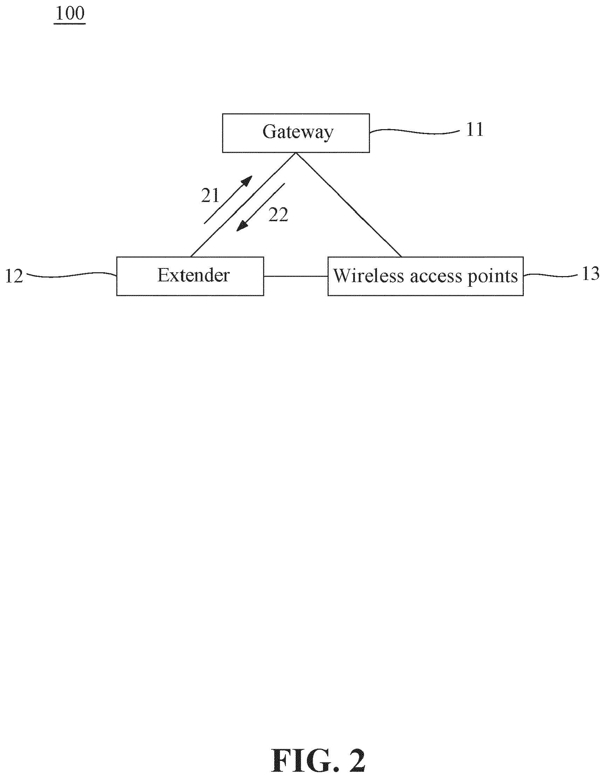

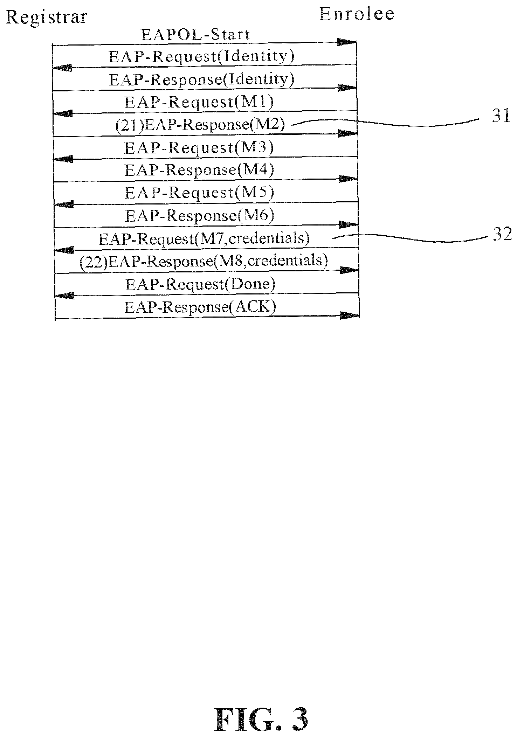

Referring to Fig. 1 to Fig. 3, Fig. 1 is a schematic view illustrating a WPS onboarding process; Fig. 2 is a schematic view of a network connection system according to the present invention; Fig. 3 is an exemplary illustration of the onboarding process of the network connection system according to the present invention. As shown in Fig. 2, the network connection system 100, according to the present invention, includes a gateway 11, an extender 12, and a wireless access point 13 (AP).

The network connection system 100 of the present invention is used for executing the Wi-Fi security protected setup (WPS) standard, providing easy-to-operate steps for users, and supporting WPA to WPA2 grades of encryption in terms of wireless security strength. All the data are encrypted and hashed first and then sent to the wireless network. After the receiver receives the data, the data is converted into the original content, which is highly secure. Specifically, refer to Fig. 1 and Fig. 2. In conventional technology, three main roles perform the onboarding process 30 of the WPS and the process of establishing a wireless mesh network, three roles, namely the enrollee router, the registrar router, and the wireless access points. The user generally registers the enrollee router to the registrar router through the E interface by the onboarding process. After the registrar router logs in to the enrollee router, a security credential 22 is generated and then sent back through the E interface, and the security credential 22 is transmitted through the M interface to the wireless access point for authentication. After the onboarding process is completed, the enrollee router uses the previously generated security credential 22 for authentication through the A interface. After the authentication is successful, the network can be accessed.

Moreover, referring to Fig. 1 to Fig. 3, the present invention, the extender 12 in the network system can establish a wireless mesh network and be the registrant of the onboarding process 30 of WPS concurrently without modifying the inherent WPS core process. Thus, the present invention achieves the goal of simple and safe Wi-Fi configuration for information appliance users in a random network environment. Specifically, according to the present invention, the gateway 11 can be used as one of the enrollee router and the registrar router of the onboarding process 30 of the WPS. The extender 12 is coupled to the gateway 11, the extender 12 serves as the other of the enrollee router and the registrar router, and the extender 12 transmits the authentication information 21 to the gateway 11.

It should be further noted that, in some embodiments, when using the wireless access point identification number network connection technology, the gateway 11 can be used as an enrollee router for the onboarding process 30 of the WPS. And the extender 12 is used as a registrar router, with which the authentication information 21 is associated. Moreover, when the gateway 11 transmits the backhaul security credential 22 to the extender 12, the extender 12 establishes a wireless mesh network through the wireless access point 13. However, the present invention is not limited to herein.

Specifically, the wireless access point 13 of the present invention is coupled to the gateway 11 and the extender 12, and the wireless access point 13 is used for establishing a wireless mesh network. In some embodiments, the wireless access point 13 may have a corresponding wireless access point identifier, and the wireless access point 13 may contain a BSSID. Specifically, the wireless access point 13 may be a device connecting a wireless network to a wired network in a computer network. However, the present invention is not limited herein.

Specifically, refer to Fig. 3, the onboarding process 30 of the WPS is mainly completed by eight message exchanges, including the M1 message exchange to the M8 message exchange, to ensure that the onboarding process 30 is highly secure. It should be further noted that, in some embodiments, as shown in Fig. 3, the gateway 11 and the extender 12 complete the onboarding process 30 of the enrollee router and the registrar router through a first message exchange 31 and a second message exchange 32. Wherein the extender 12 transmits the authentication information 21 to the gateway 11 in the first message exchange 31, and the gateway 11 transmits the backhaul security credential 22 to the extender 12 in the second message exchange 32.

Specifically, as shown in Fig. 3, when the wireless access point identification number network connection technology is used, the gateway 11 is used as an enrollee router, and the extender 12 is used as a registrar router. The first message exchange 31 is an M2 message exchange, and the aforementioned second message exchange 32 is an M7 message exchange, thereby completing the onboarding process 30 of the WPS. It should be further explained that, compared with the prior art wherein a large number of gateways must be accessed to serve as registrar routers, so as to use M1 message exchange to transmit authentication information to the gateways serving as enrollee routers, the network connection system 100 of the present invention, through the wireless access point identification number network connection technology, only uses the gateway 11 as an enrollee router, and only provides the gateway 11 as an enrollee router to transmit information to the extender 12 as a registrar router in the M1 message exchange. At the same time, the extender 12 only transmits the authentication information 21 associated with the extender 12 to the gateway 11 during the M2 message exchange, so that the gateway 11 can transmit the backhaul security credential 22 to the extender 12 during the M7 message exchange, so as to reduce the necessity for the network connection system to access a large number of gateways without affecting the security. As such, the network connection system 100 of the present invention has high security and convenience. However, the present invention is not limited to herein.

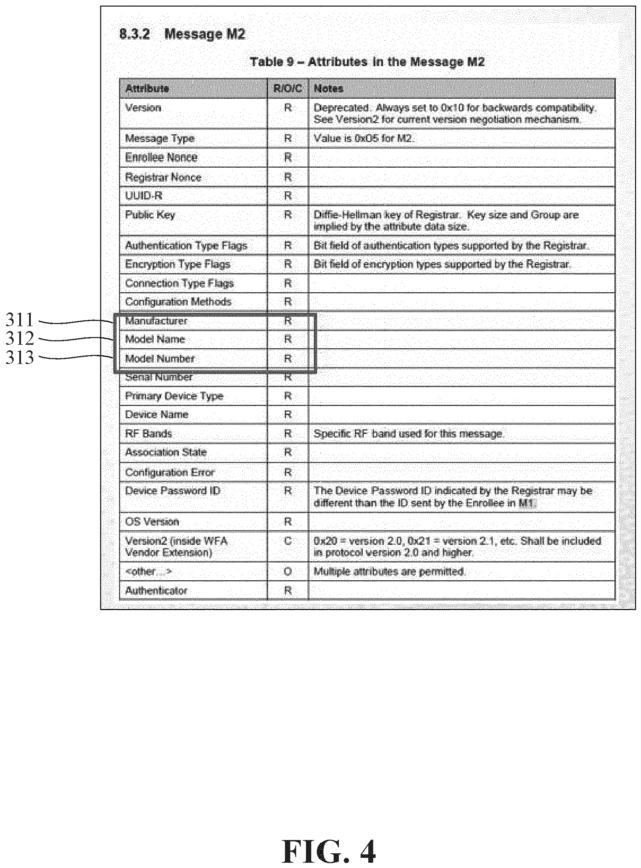

Specifically, referring to Fig. 4. Fig. 4 is a schematic view illustrating the specific information of the first message exchange of the network connection system according to the present invention. As shown in Fig. 4, in some embodiments, when the wireless access point identification number network connection technology is used, the network connection system 100 transmits the authentication information 21 to the gateway 11 through the extender 12 in the first message exchange 31. The first message exchange 31 may include manufacturer information 311, model name information 312 , and model number information 313. It should be further explained that, in general, the manufacturer information 311 and the model name information 312 correspond to each other, and the gateway 11 can confirm that the extender 12 is a model supported by the gateway 11 according to the aforementioned authentication information 21 as the basis of security, so that the gateway 11 can transmit the backhaul security credential 22 to the extender 12, complete the onboarding process 30 of the enrollee router and the registrar router, and realize the almost automatic way to join the topology network and obtain security credential 22 to minimize the user's difficulty in WPS setting and achieve high convenience.

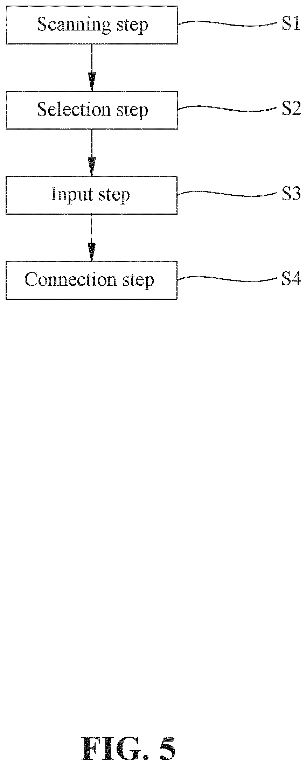

Refer to Fig. 5 in conjunction with Figs. 1 to Fig. 4. Fig. 5 is a flowchart illustrating the steps of the network connection method of the present invention. The present invention is based on the network connection system 100 described above. A network connection method of the network connection system 100 is further provided. The method includes the following steps:

The scanning step S1 is to scan an environment to see if there is a wireless access point 13, and the wireless access point 13 contains a plurality of BSSIDs, and then the selection step S2 is performed.

The selection step S2 is to receive a piece of selection information for selecting one of the BBSIDs of the wireless access point 13, the selection information is generated by the user selecting one of the BSSIDs, and then the input step S3 is performed.

The input step S3 is to receive a wireless access point identification number input by the user into the gateway 11, the wireless access point identification number corresponding to the aforementioned wireless access point 13, and then execute the connection step S4.

The connection step S4 is to complete the onboarding process of authenticating the router and registering the router to establish a wireless mesh network through the network connection system 100 by executing one of the standard identification number network connection or the wireless access point identification number network connection.

It should be further explained that, according to the network connection method of the present invention, if no wireless access point 13 is generated by scanning in the scanning step S1, or if the user does not select one of the BSSIDs in the selection step S2, the connection step S4 establishes the wireless mesh network by executing the standard identification number network connection; otherwise, the connection step S4 establishes the wireless mesh network by executing the wireless access point identification number network connection .

In summary, the network connection system 100 is in combination with the network connection method according to the present invention, wherein the gateway 11 can be used as one of the enrollee router and the registrar router, and the extender 12 can also be used as one of the enrollee router and the registrar router to perform one of the standard identification number network connection and the wireless access point identification number network connection, so that the extender 12 establishes a wireless mesh network through the wireless access point 13. Thereby, the network connection system 100 can use the security credential 22 to pass the authentication of the wireless network to use the network instead of using a button to establish a wireless mesh network as in the prior art. Therefore, the network connection system 100 can realize the simultaneous login of multiple devices; on the other hand, the nodes lacking the security credential 22 cannot enter the wireless network through authentication, thereby ensuring the security of the wireless network.

In addition, since the network connection system 100 of the present invention can use one of the standard identification number network connection and the wireless access point identification number network connection to complete the onboarding process of the enrollee router and the registrar router, the present invention provides the user with a way to flexibly switch the roles of the gateway 11 and the extender 12 as the enrollee router and the registrar router depend on the situation. So the network connection system 100 can be directly used with the WPS products currently on the market and has wide applicability.

It is worth noting that, on the premise of ensuring the security of the wireless network, the network connection system 100 in combination with the network connection method according to the present invention can use the wireless access point identification number network connection method to provide the backhaul security credential 22 to the extender 12 instead of just providing the fronthaul security credential, so that the extender 12 can directly establish a wireless mesh network through the wireless access point 13, while satisfying a high degree of security, achieving a high degree of convenience, and realizing the objective of the gateway 11 being able to control the type of the extender 12 connected to it.

It is also worth noting that, compared with the prior art that must accessed a large number of gateways as registrar routers to use the M1 message exchange to transmit the authentication information 21 to the gateway, the network connection system 100 of the present invention uses the gateway 11 as an enrollee router through the wireless access point identification number network connection technology, and the extender 12 transmits the authentication information 21 associated with the extender 12 is sent to the gateway 11 only during the M2 message exchange, so that the gateway 11 can transmit the backhaul security credential 22 to the extender 12 during the M7 message exchange, so as to achieve no impact on security. On the premise of reducing the need for the network connection system to access a large number of gateways, the network connection system 100 of the present invention provides high security and convenience.

In order to further understand the structural features of the present invention, the application of technical means and the expected effect, the embodiments of the present invention are described, and it is believed that the present invention can be understood in depth and in detail.

### First Embodiment

Hereinafter, the first embodiment of the network connection system 100 of the present invention will be described with reference to the drawings, so that those skilled in the art to which the present invention pertains can more clearly understand possible variations. Elements designated with the same reference numerals as above are substantially the same as those described above with reference to FIG. 1. The same elements, features, and advantages as the network connection system 100 will not be repeated.

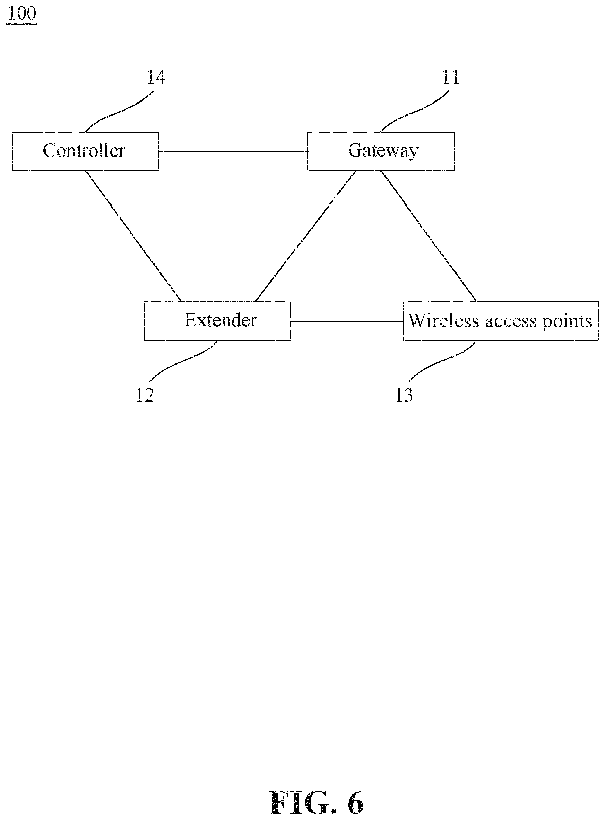

Refer to Fig. 6, which is a schematic view of a network connection system according to a first embodiment of the present invention. As shown in Fig. 6, the network connection system 100 according to the first embodiment of the present invention includes a gateway 11, an extender 12, a wireless access point 13, and a controller 14.

Specifically, according to the first embodiment of the present invention, the controller 14 exists in or is coupled to the gateway 11 and the extender 12, and the controller 14 is used to control the network connection system 100 to configure the gateway 11 and the extender 12 to serve as an enrollee router and a registrar router, respectively. It should be further explained that, according to the network connection system 100 of the first embodiment of the present invention, the wireless mesh network can be established by executing one of the standard identification number network connection and the wireless access point identification number network connection to achieve the effect of seamless connection.

It should be further noted that the controller 14 according to the present invention may be a combination of software, hardware, and firmware. The network connection system 100 can display the wireless access point 13 and the BSSIDs through the controller 14, and the user can input the wireless access point identification number of the gateway 11 through the controller 14, the wireless access point identification number corresponds to the wireless access point 13, however, the present invention is not limited herein.

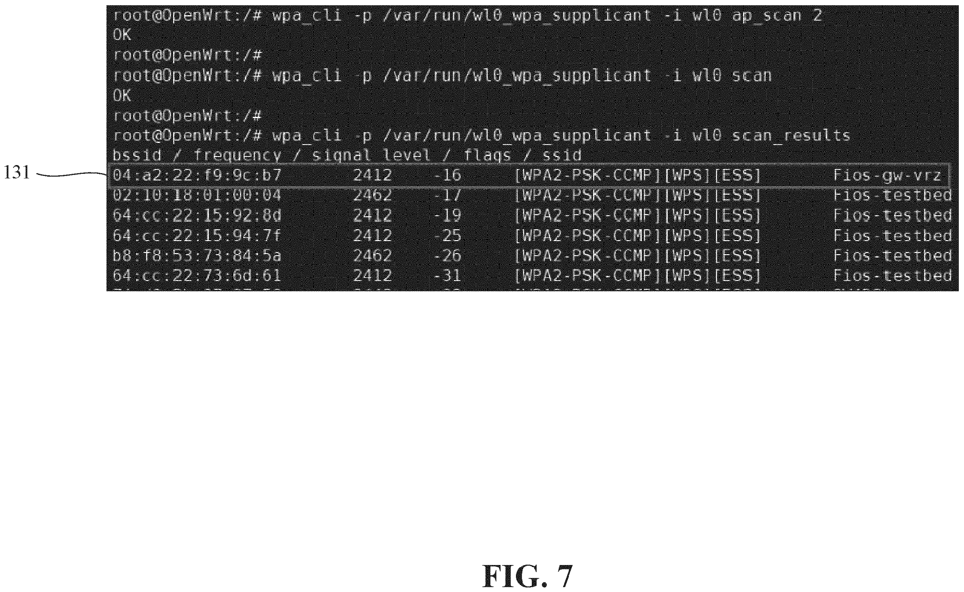

Specifically, refer to Fig. 7, which is an exemplary program screen illustrating the actual execution of the network connection system according to the present invention. As shown in Fig. 7 , the wireless access point 13 according to the first embodiment of the present invention may have a corresponding wireless access point identification number, and the wireless access point 13 may include a plurality of BSSIDs 131 the user to select one of the BSSIDs 131 and input the corresponding wireless access point identification number, thereby enabling the wireless access point identification number network connection to establish a wireless mesh network, and a more efficient method is provided through the grouped BSSIDs 131 to manage each BSSID 131 of the wireless access point 13.

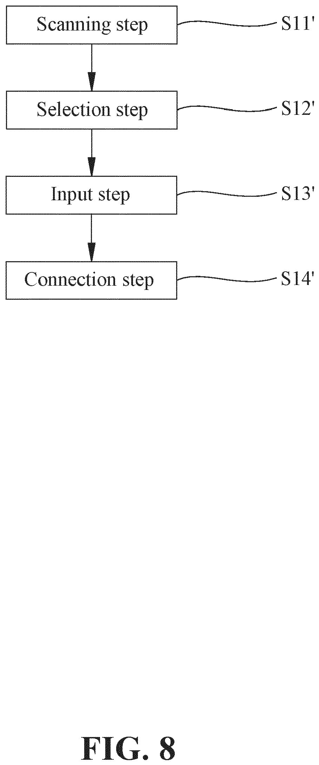

Refer to Fig. 8 in conjunction with Fig. 6 and Fig. 7. Fig. 8 is a flowchart illustrating the steps of the network connection method according to the first embodiment of the present invention. The present invention, based on the aforementioned network connection system 100, further provides a network connection method of the network connection system 100. The method includes the following steps:

The scanning step S 11' is for the controller 14 to scan an environment to see if there is a wireless access point 13, and the wireless access point 13 contains a plurality of BSSIDs 131, and then the selection step S12' is performed.

The selection step S12' is for the controller 14 to receive a selection information for selecting one of the BBSIDs 131 of the wireless access point 13, and then the input step S13' is performed.

The input step S13' is for the controller 14 to receive a wireless access point identification number for the gateway 11, and then executing the connection step S14'.

The connection step S 14' is for the controller 14 to establish a wireless mesh network by executing one of the standard identification number network connection or the wireless access point identification number network connection.

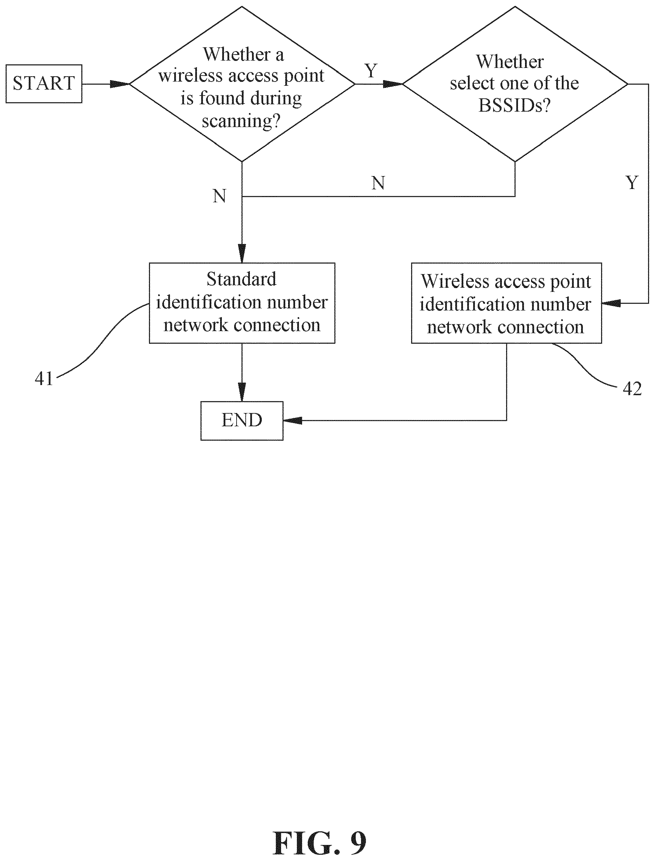

Refer to Fig. 9 in conjunction with Fig. 6 to Fig. 8. Fig. 9 is a schematic view illustrating the actual execution of the network connection system according to the first embodiment of the present invention. The actual execution process of the network connection method by the network connection system 100 according to the present invention is described as follows: firstly, the scanning step S11' is performed, and the controller 14 scans whether there is a wireless access point 13 in the environment. In addition, the wireless access point 13 includes a plurality of BSSIDs 131, wherein, if the network connection system 100 scans and does not find a wireless access point 13 for the user to select, the connection step S14' is directly executed by performing a standard identification number network connection 41 to establish a wireless mesh network; otherwise, the selection step S12' is executed for the user to select one of the BSSIDs 131 to generate the selection information, and the controller 14 receives the selection information, wherein if the user does not select one of the BSSIDs 131, then directly execute the connection step S14' to establish a wireless mesh network by executing the standard identification number network connection 41; otherwise, the input step S13' is executed, the controller 14 receives from the user the input wireless access point identification number corresponding to the wireless access point 13; finally, the connection step S14' is performed, and a wireless mesh network is established by executing the wireless access point identification number network connection 42.

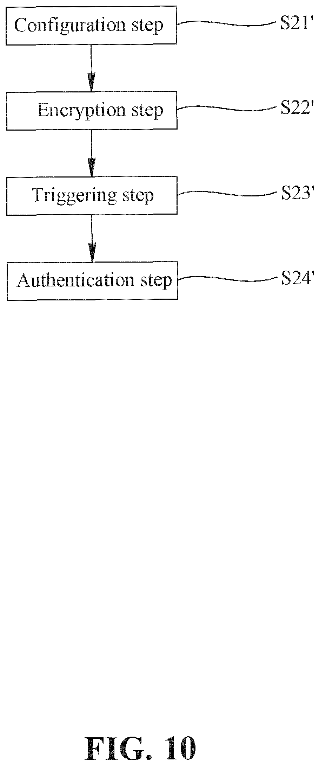

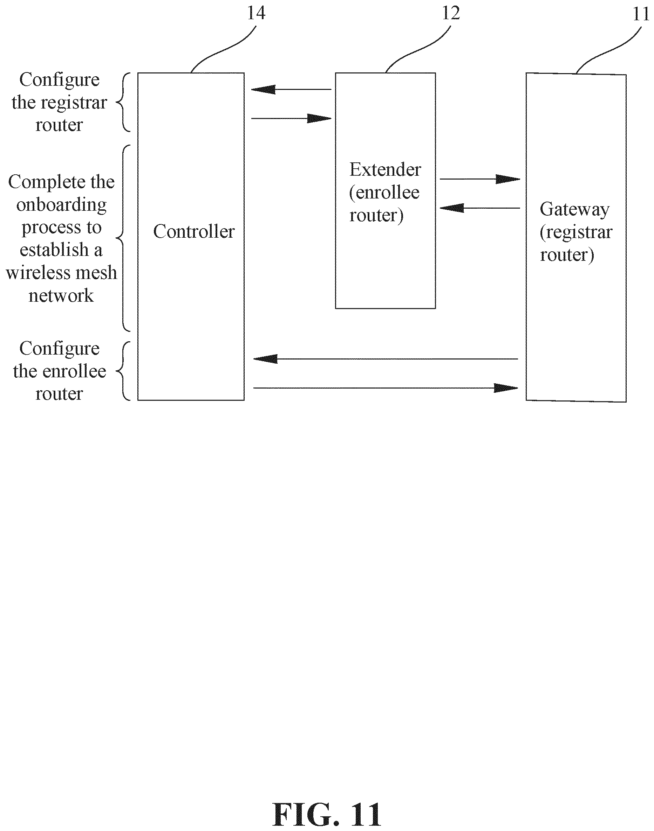

Refer to Fig. 10 and Fig. 11. Fig. 10 is a flowchart illustrating the steps of the standard identification number network connection according to the first embodiment of the present invention; Fig. 11 is a schematic view illustrating the actual execution of the standard identification number network connection according to the first embodiment of the present invention. In the present embodiment, based on the above network connection system 100, when the standard identification number network connection 41 is used to establish a wireless mesh network, the network connection method of the network connection system 100 further includes the following steps:

In the configuration step S21', the controller 14 configures the extender 12 as an enrollee router and the gateway 11 as a registrar router, and then performs the encryption step S22'.

In the encryption step S22', the gateway 11 and the extender 12 transmit information to each other to randomly generate encrypted information 23 (not shown), and then execute the triggering step S23'.

In the triggering step S23', both the extender 12 and the gateway 11 input the encrypted information 23, so that the extender 12 and the gateway 11 authenticate each other to complete the onboarding process 30, and then execute the authentication step S24'.

In the authentication step S24', the gateway 11 transmits the security credential 22 to the extender 12, so that the extender 12 establishes a wireless mesh network through the wireless access point 13.

Refer to Fig. 11 , in conjunction with Fig. 10, according to the network connection system 100 of the present invention, the actual process of executing the standard identification number network connection 41 is described as follows: First, the configuration step S21' is executed, the controller 14 configures the extender 12 as an enrollee router, and use the gateway 11 as a registrar router; then execute the encryption step S22', through the mutual information transmission between the gateway 11 and the extender 12, to randomly generate encrypted information 23; then in the triggering step S23', the user inputs the encrypted information 23 on both the extender 12 and the gateway 11, so that the extender 12 and the gateway 11 authenticate each other to complete the onboarding process 30; finally, the authentication step S24' is performed, and the gateway 11 transmits the security credential 22 to the extender 12 to complete the onboarding process, so that the extender 12 establishes a wireless mesh network through the wireless access point 13.

It should be further noted that the above encryption step S22' can further generate a time interval, which is used to restrict the user to input the encrypted information 23 within the time interval. If the encrypted information 23 is inputted, the method will directly return to the configuration step S21'. In this way, the stability of the standard identification number network connection 41 is further improved. However, the disadvantage of adding the time interval in the encryption step S22' is that it increases the difficulty of the user in WPS setting. Rather, the present invention should not be construed as limited herein.

Therefore, it can be seen from the above description that the first embodiment of the present invention utilizes the design of WPS and the initial registration action of nodes to ensure that malicious/illegitimate nodes cannot be easily disguised as the initial legitimate nodes to penetrate into the network before the random cluster topology establishment; thereby achieving the high security.

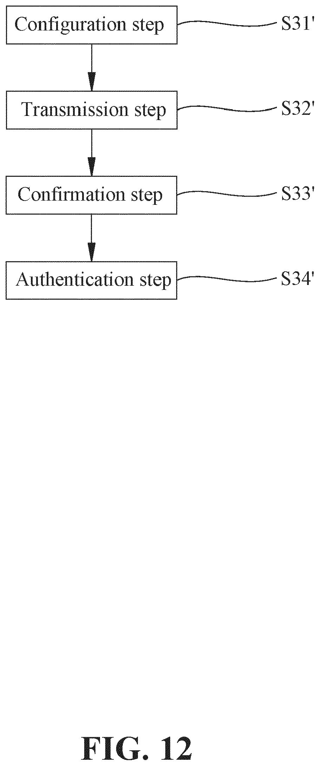

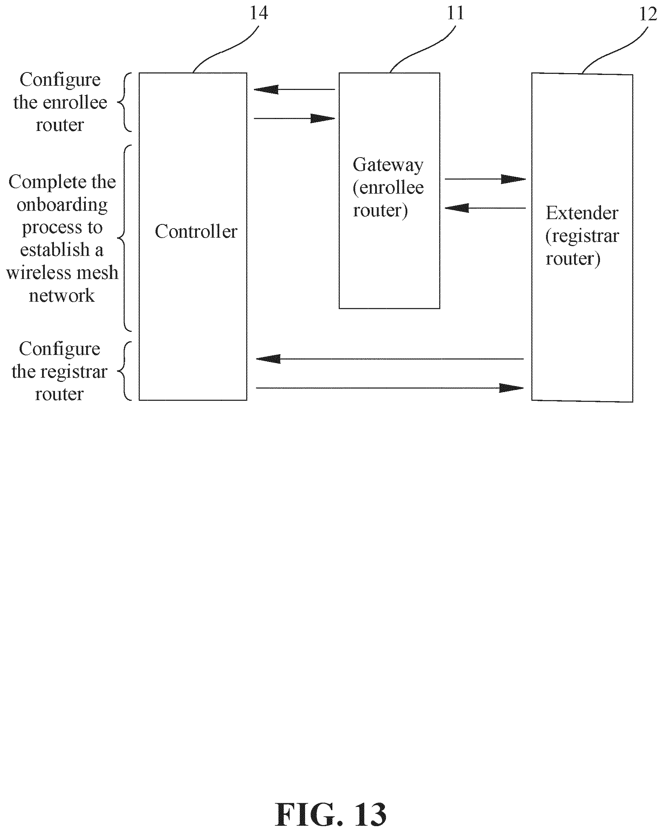

Refer to Fig. 12 and Fig. 13. FIG. 12 is a flowchart illustrating the steps of the wireless access point identification number network connection according to the first embodiment of the present invention; Fig. 13 is a schematic view illustrating the actual execution of the steps of the wireless access point identification number network connection according to the first embodiment of the present invention. In the present embodiment, based on the above network connection system 100, when the wireless access point identification number network connection 42 is used to establish a wireless mesh network, the network connection method of the network connection system 100 further includes the following steps:

In the configuration step S31', the controller 14 configures the gateway 11 as the enrollee router and the extender 12 as the registrar router, and then executes the transmission step S32'.

In the transmission step S32', the extender 12 transmits the authentication information 21 to the gateway 11 in the first message exchange 31, and then executes the confirmation step S33'.

In the confirmation step S33', the gateway 11 confirms that the extender 12 is a model supported by the gateway 11 according to the authentication information 21, and then performs the authentication step S34'.

In the authentication step S34', the gateway 11 transmits the security credential 22 to the extender 12 in the second message exchange 32, so that the extender 12 establishes a wireless mesh network through the wireless access point 13.

Refer to Fig. 12, in conjunction with Fig. 13. According to the network connection system 100 of the present invention, the actual process of executing the wireless access point identification number network connection 42 is described as follows: First, perform the configuration step S31', the controller 14 configures the gateway 11 as the enrollee router, and the extender 12 as the registrar router; then executes the transmission step S32', the extender 12 transmits the authentication information 21 to the gateway 11 in the first message exchange 31; the, in the confirmation step S33', the gateway 11 confirms that the extender 12 is a model supported by the gateway 11 according to the authentication information 21; finally, in the authentication step S34', the gateway 11 transmits the security credential 22 in the second message exchange 32 to the extender 12 which enables the extender 12 to establish a wireless mesh network through the wireless access point 13.

As such, it can be seen from the above description that the gateway 11 can confirm that the extender 12 is a model supported by the gateway 11 according to the authentication information 21 transmitted by the first message exchange 31, so that the gateway 11 can transmit the security credential 22 to the extender 12 to complete the onboarding process of the enrollee router and the registrar router, to join the topology network in an almost automatic manner and obtain the security credential 22, which minimizes the difficulty for the user in WPS setting, and achieves high convenience.

The following provides other examples of the network connection system 100 to make possible variations more clearly understood by those skilled in the art to which the present invention pertains. The same elements, features, and advantages as the network connection system 100 will not be repeated.

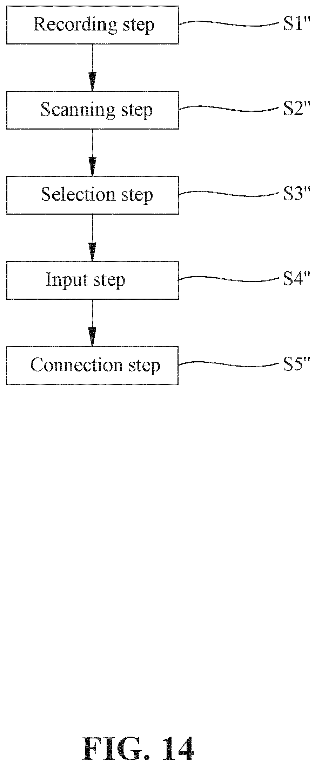

Refer to Fig. 14. Fig. 14 is a flowchart illustrating the steps of the network connection method according to the second embodiment of the present invention. The present invention, based on the network connection system 100 described above, further provides a network connection method, including the following steps:

In the recording step S1", the controller 14 confirms whether the extender 12 has ever established a wireless mesh network through the wireless access point 13, and if so, directly establishes a network connection through the standard identification number network connection 41; otherwise, the scanning step S2" is performed.

In the scanning step S2", the network connection system 100 scans to find a wireless access point 13, and the wireless access point 13 includes a plurality of BSSIDs 131, and then executes the selection step S3".

In the selection step S3", one of the BSSIDs 131 is selected, and then the input step S4" is executed.

In the input step S4", the wireless access point identification number corresponding to the wireless access point 13 is inputted, and then execute the connection step S5".

In the connection step S5", by executing one of the standard identification number network connection 41 and the wireless access point identification number network connection 42, the onboarding process of the enrollee router and the registrar router is completed to establish a wireless network mesh network.

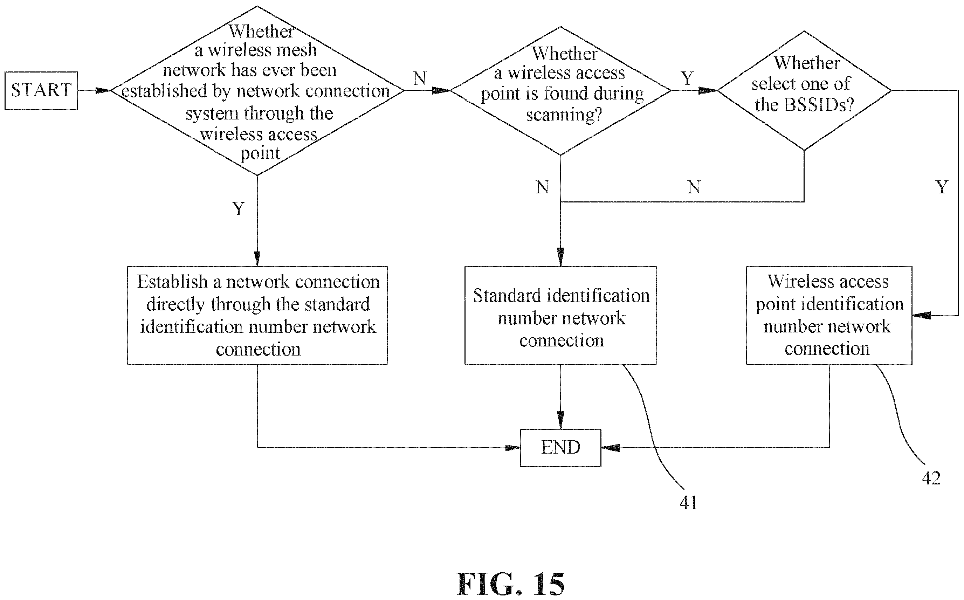

Refer to Fig. 15 in conjunction with Fig. 14. Fig. 15 is a schematic view illustrating the actual execution of the network connection system according to the second embodiment of the present invention. The actual execution of the network connection method in the network connection system 100 according to the present invention is described as follows: first, the recording step S 1" is performed, and the controller 14 confirms whether the extender 12 has ever established a wireless mesh network through the wireless access point 13; if so, establish a network connection directly through the standard identification number network connection 41; otherwise, execute the scanning step S2", the network connection system 100 scans to find a wireless access point 13, and the wireless access point 13 includes a plurality of BSSIDs 131, wherein, if the network connection system 100 scans and does not find the wireless access point 13, then directly perform the connection step S5" to complete the onboarding process of the enrollee router and the registrar router by executing the standard identification number network connection 41 to establish the wireless mesh network; otherwise, the selection step S3" is performed to select one of the BSSIDs 131, wherein, if none of the BSSIDs 131 is selected, then directly execute the connection step S5" to complete the onboarding process of the enrollee router and the registrar router by executing the standard identification number network connection 41, so as to establish a wireless mesh network; otherwise, execute the input step S4" to input the wireless access point identification number corresponding to the wireless access point 13; finally, the connection step S5" is executed, and the onboarding process of the enrollee router and the registrar router is completed by executing the wireless access point identification number network connection 42, to establish a wireless mesh network.

Thereby, the present invention has following implementation effect and technical effect:

First, the network connection system 100 of the present invention is combined with the network connection method according to the present invention, wherein the gateway 11 can be used as one of an enrollee router and a registrar router, and the extender 12 can be used as the other one of the enrollee router and the registrar router, to establish a wireless mesh network by executing one of the standard identification number network connection 41 and the wireless access point identification network connection 42 so that the extender 12 can establish a wireless mesh network through the wireless access point 13. Thereby, the network connection system 100 of the present invention can use the security credential 22 to pass the authentication of the wireless network in order to use the network, instead of using a button to establish a wireless mesh network as in the prior art, so that the network connection system 100 of the present invention can realize the simultaneous login of multiple devices; on the other hand, the nodes lacking the security credential 22 cannot enter the wireless network through authentication, thereby ensuring the security of the wireless network.

Second, the network connection system 100 according to the present invention can be combined with the network connection method according to the present invention to provide backhaul security credential 22 to the extender 12 under the premise of ensuring the security of the wireless network, instead of just providing the fronthaul security credential. The extender 12 can directly establish a wireless mesh network through the wireless access point 13, which can achieve a high degree of convenience while satisfying a high degree of security, and realize the objective that a gateway 11 is able to control the type of extender 12 to which it is connected.

Third, compared with the prior art wherein a large number of gateways must be accessed as registrar routers to use M1 message exchange to transmit the authentication information 21 to the gateway, the network connection system 100 of the present invention in combination with the network connection method according to the present invention uses the gateway 11 as an enrollee router through the wireless access point identification number network connection technology, and the extender 12 is only used when the M2 message is exchanged to send the authentication information 21 associated with the extender 12 to the gateway 11, so that the gateway 11 can transmit the backhaul security credential 22 to the extender 12 during the M7 message exchange, so as to achieve the premise of not affecting the security, thus reducing the necessity for the network connection system to access a large number of gateways, and the network connection system 100 of the present invention has high security and convenience.

Fourth, the network connection system 100 of the embodiment of the present invention uses the WPS design and the initial node registration action to automatically complete the WPS onboarding process to ensure that malicious/illegitimate nodes cannot be easily disguised as the ones before topology establishment and penetrate into the network before the random topology of the group is formed, so as to achieve high security.

Fifth, according to the network connection system 100 of the embodiment of the present invention, the gateway 11 can confirm that the extender 12 is a model supported by the gateway 11 according to the authentication information 21 transmitted by the first message exchange 31, so that the gateway 11 can transmit the security credential 22 to the extender 12 to complete the onboarding process of the enrollee router and the registrar router, and join the topology network in an almost automatic way to obtain the security credential 22. Therefore, the user can accomplish the WPS setting with minimized difficulty and high convenience.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A network connection system, comprising:
a gateway, used as one of an enrollee router or a registrar router of an onboarding process of Wi-Fi Protected Setup (WPS);
an extender, coupled to the gateway, and used as the other one of the enrollee router or the registrar router of an onboarding process of WPS, and the extender transmitting a piece of authentication information to the gateway;
and at least one wireless access point (AP), coupled to the gateway and the extender, used for establishing a wireless mesh network;
wherein when the gateway is used as the enrollee router, the extender is used as the registrar router;
wherein when the gateway is used as the registrar router, the extender is used as the enrollee router; and
wherein the authentication information is related to the extender; and after the gateway confirms that the extender is a model supported by the gateway according to the authentication information, the gateway transmits a backhaul security credential to the extender, so that the extender can establish a wireless mesh network through the wireless access point.

2. The network connection system according to claim 1, wherein the gateway has a wireless access point identification number (AP PIN), the AP PIN corresponds to the wireless access point.

3. The network connection system according to claim 2, wherein the wireless access point includes a plurality of basic service set identifiers (BSSIDs).

4. The network connection system according to claim 1, wherein the authentication information includes one or any combination of a piece of manufacturer information, a piece of model name information, and a piece of model number information.

5. The network connection system according to claim 1, further comprising a controller, coupled to the gateway and the extender, and used for controlling the network connection system to configure the gateway and the extender as enrollee router and registrar router respectively.

6. The network connection system according to claim 1, wherein the gateway and the extender complete the onboarding process of the enrollee router and the registrar router through a first message exchange and a second message exchange, wherein the extender transmits the authentication information to the gateway during the first message exchange, and the gateway transmits the security credential to the extender during the second message exchange.

7. The network connection system according to claim 1, wherein the gateway acts as an enrollee router, and the extender acts as a registrar router.

8. A network connection method, applicable to the network connection system according to claim 1, comprising:
a scanning step, a controller scans whether the wireless access point exists in the environment, and the wireless access point includes a plurality of basic service set identifiers (BSSIDs);
a selection step, the controller receives a piece of selection information for selecting one of the BSSIDs;
an input step, the controller receives a wireless access point personal identification number (AP PIN) of the gateway; and
a connection step, the controller executes one of a standard identification number network connection or an AP PIN network connection to complete the onboarding of the enrollee router and the registrar router to establish a wireless mesh network;
wherein, if the controller scanning does not generate the wireless access point in the scanning step, or the controller does not receive the selection information of one of the BSSIDs in the selection step, then the connection step performs the standard identification network connection to establish the wireless mesh network; otherwise, the connection step establishes the wireless mesh network by executing the AP PIN network connection.

9. The network connection method according to claim 8, wherein the network connection method further includes a recording step, the controller confirms whether the extender has ever established a wireless mesh through the AP PIN network connection; if yes, a network connection is established directly through the standard identification number network connection; otherwise, the scanning step is performed.

10. The network connection method according to claim 8, wherein when using the standard identification number network connection to establish the wireless mesh network, the network connection method further comprises:
a configuration step, the controller configures the extender as the enrollee router and the gateway as the registrar router;
an encryption step, the gateway and the extender transmit information to each other to randomly generate an encrypted information;
a triggering step, both the extender and the gateway input the encrypted information, so that the extender and the gateway authenticate each other to complete the onboarding process; and
an authentication step, the gateway transmits the security credential to the extender, so that the extender establishes the wireless mesh network through the wireless access point.

11. The network connection method according to claim 10, wherein the encryption step further generates a time interval, for restricting a user to input the encrypted information with the time interval.

12. The network connection method according to claim 8, wherein when using the AP PIN network connection to establish the wireless mesh network, the network connection method further comprises:
a configuration step, the controller configures the gateway as an enrollee router, and the extender as the registrar router;
a transmission step, the extender transmits the authentication information to the gateway during a first message exchange;
a confirmation step, the gateway confirms that the extender is a model supported by the gateway according to the authentication information; and
an authentication step, the gateway transmits the security credential to the extender during a second message exchange, so that the extender establishes the wireless mesh network through the wireless access point.
